(19)

**Europäisches Patentamt**
**European Patent Office**
**Office européen des brevets**

(11) **EP 1 264 973 B1**

(12) **EUROPEAN PATENT SPECIFICATION**

(45) Date of publication and mention
of the grant of the patent:
**15.08.2007 Bulletin 2007/33**

(51) Int Cl.:
*F02B 3/06* *(2006.01)*     *F02F 3/26* *(2006.01)*
*F02B 23/06* *(2006.01)*

(21) Application number: **02012335.2**

(22) Date of filing: **04.06.2002**

(54) **Diesel engine, fuel combustion method for diesel engine and method for designing a diesel engine**

Brennstoffverbrennungsverfahren einer Dieselbrennkraftmaschine und Verfahren zum Entwerfen einer Dieselmaschine

Procédé de combustion dans un moteur Diesel et procédé permettant d'ébaucher un moteur Diesel

(84) Designated Contracting States:
**DE**

(30) Priority: **06.06.2001 JP 2001170464**

(43) Date of publication of application:
**11.12.2002 Bulletin 2002/50**

(73) Proprietor: **Mazda Motor Corporation**
**Aki-gun,**
**Hiroshima 735-8670 (JP)**

(72) Inventors:
• **Shimo, Daisuke**
**Aki-gun,**
**Hiroshima, 735-8670 (JP)**
• **Kondou, Terunori**
**Aki-gun,**
**Hiroshima, 735-8670 (JP)**
• **Kataoka, Motoshi**
**Aki-gun,**
**Hiroshima, 735-8670 (JP)**
• **Terazawa, Yasuyuki**
**Aki-gun,**
**Hiroshima, 735-8670 (JP)**

(74) Representative: **Zinnecker, Armin et al**
**Lorenz-Seidler-Gossel,**
**Widenmayerstrasse 23**
**80538 München (DE)**

(56) References cited:
**EP-A- 0 363 190        EP-A- 0 412 552**
**EP-A- 0 810 365**

• **PATENT ABSTRACTS OF JAPAN vol. 2000, no. 21, 3 August 2001 (2001-08-03) & JP 2001 115844 A (YANMAR DIESEL ENGINE CO LTD), 24 April 2001 (2001-04-24)**
• **PATENT ABSTRACTS OF JAPAN vol. 1999, no. 05, 31 May 1999 (1999-05-31) & JP 11 036868 A (MAZDA MOTOR CORP), 9 February 1999 (1999-02-09)**
• **PATENT ABSTRACTS OF JAPAN vol. 1997, no. 06, 30 June 1997 (1997-06-30) & JP 09 041975 A (ISUZU MOTORS LTD), 10 February 1997 (1997-02-10)**

**EP 1 264 973 B1**

**Description**

The present invention relates to diesel engines, fuel combustion methods for diesel engines and methods for designing a diesel engine.

Direct-injection diesel engines in which the top portion of the piston is provided with a reentrant-type cavity are well known in the art. For example, JP H09-41975A discloses that by setting the cavity shape such that fuel injected toward the lip portion of the piston is detached from the cavity side wall when it moves from the lip portion toward the bottom portion of the cavity, the mixing of the fuel spray with air can be improved, and the generation of smoke can be suppressed.

Furthermore, the Journal of the Society of Automotive Engineers of Japan Vol. 31, No. 3, July 2000, pp. 51 to 56 discloses that when the center of the bottom portion of the reentrant-type cavity of the piston protrudes upward, then ① a vertical vortex flowing downward along the side wall below the lip portion is formed during the compression stroke, ② when fuel is injected, the fuel spray is sucked in by the vertical vortex and forms a flow that rotates downward along the side wall below the lip portion, ③ when the lip diameter is increased, the reverse squish flow becomes weak, and the outflow of the air-fuel mixture to the squish area is suppressed, ④ due to the influence of swirl, the vertical vortex becomes a helical vortex, ⑤ this helical vortex promotes the formation of the air-fuel mixture and combustion in the cavity, ⑥ after that, the air-fuel mixture is exhausted to the squish area, and soot remaining after the burning is oxidized.

It is an object of the present invention to suppress the generation of NOx in direct-injection diesel engines. The amount of NOx generated grows as the temperature of the air-fuel mixture increases and as the combustion time of the air-fuel temperature increases. That is to say, when there are heat spots (local high temperature regions) in the combustion chambers over a long time, the NOx increases. With regard to this issue, the present invention decreases and evades the amount of NOx generated by striving for an early dispersion of such heat spots.

It is another object of the present invention to decrease the amount of soot exhausted from the direct-injection diesel engine. The amount of soot generated increases when combustion takes place while the fuel is insufficiently mixed with air, Also, when the mixture between the combustion gas and air during the later half of the combustion is insufficient, the oxidation of soot does not proceed, and as a result the amount of soot exhausted becomes large. With regard to this issue, the present invention suppresses the generation of soot by promoting the mixture of the fuel spray and air, thus raising the utilization ratio of air in the latter half of the combustion to enhance the oxidation of soot, and decreasing and evading the amount of soot exhausted.

In order to solver the afore-mentioned problems, the present inventors studied mechanisms for creating a vertical vortex in a reentrant-type cavity of a piston top portion, and tried to intensify the vertical vortex with an approach that is different from the related art. In the related art, the vertical vortex in the cavity is created during the compression stroke, and the fuel spray is sucked into it, but in accordance with the present invention, a relatively concentrated fuel vapor region is formed near the lip portion during the ignition lag time, and the creation/intensification of the vertical vortex is achieved by guiding this fuel vapor with an expansive flow of combustion gas after igniting the fuel vapor toward the bottom of the cavity. The following is a more specific explanation of aspects of the present invention.

In one aspect of the present invention, a method for fuel combustion in a diesel engine in which a reentrant-type cavity whose diameter becomes smaller towards an aperture edge is provided at a top portion of a piston, includes the steps of:

injecting fuel with a fuel injector toward a lip portion of the piston formed at the aperture edge of the cavity;
forming a region of fuel vapor near the lip portion by letting the fuel spray injected by the fuel injector reach the lip portion in an ignition lag time;
igniting the fuel at the front in direction of the fuel injection of the fuel injector, and guiding, by an expansive flow of combustion gas due to the ignition, the fuel vapor in front of the ignition position toward a bottom of the cavity along a wall surrounding the cavity; and
until fuel injection is terminated, letting the maximal temperature site shift within the cavity from the lip portion toward the bottom portion of the cavity.

That is to say, the present invention utilizes the expansive flow of the combustion gas to guide the fuel vapor from the vicinity of the lip portion to the bottom of the cavity, thereby achieving a dispersion or shifting of heat spots.

In accordance with the conventional concept of vertical vortex combustion, a vertical vortex is formed in the compression stroke, and the fuel spray injected toward a location below the lip portion is sucked into the vertical vortex, so that the fuel spray is slowly dispersed toward the bottom of the cavity by the vertical vortex during the ignition lag time. Therefore, an accumulation of fuel vapor that is appropriate for ignition cannot be achieved near the lip portion, and ignition tends to occur at a location downstream in the vertical vortex where fuel vapor has accumulated. In this case, the expansive flow of combustion gas caused by the ignition spreads not only in the downstream direction of the vertical vortex but also in the upstream direction, thus weakening the intensity of the expansive flow, so that the effect of the fuel vapor hitting the wall surrounding the cavity and being guided to the bottom of the cavity is weak, and the contribution to the intensification of the vertical vortex is not that large after all. So, even though a vertical vortex is created during the compression stroke, a strong vertical vortex is not attained.

By contrast, in the present invention, the fuel spray reaches the lip portion during the ignition lag time and a fuel vapor region is formed near the lip portion. The ignition position (ignition point) of the fuel spray is located upstream from the concentrated fuel vapor, so that the combustion spreads in a direction towards the downstream side. Therefore, a strong expansive flow is generated. It should be noted that the reason why the ignition point is located on the upstream side is because an intensive vertical vortex is not formed at the compression stroke, and it appears that the fuel becomes too rich near the lip portion and a location with a concentration suitable for ignition is somewhat removed from the lip portion. In the present invention, due to the expansive flow of the combustion gas after igniting the fuel vapor near the lip portion, the combustion gas is driven against the wall surrounding the cavity (in particular the border region between the lip portion and the portion that is caved outward from the lip portion in the direction of the piston diameter), and guided to the bottom of the cavity, and a unidirectional intensive expansive flow is created, which propagates the flame over the fuel guided to the bottom of the cavity, further augmenting the vertical vortex. That is to say, one difference to the related art is that the expansive flow of combustion gas is actively utilized to guide fuel vapor to the cavity bottom.

Then, as the expansive flow of combustion gas guides the fuel vapor toward the bottom of the cavity, the flame is propagated to the cavity bottom, so that also the expansive flow whirls from the lip portion to the cavity bottom. Thus, a heat spot temporarily spreads from the vicinity of the lip portion to the cavity bottom, but since the fuel vapor near the lip portion becomes less, a heat spot is generated at the cavity bottom, and the heat spot at the lip portion is quickly extinguished. That is to say, until the end of the fuel injection, the position of the maximum temperature in the cavity shifts from the lip portion to the bottom portion of the cavity. Therefore, heat spots do not become large at a certain position in the cavity, or heat spots are quickly extinguished, which is advantageous with regard to the reduction of NOx.

A diesel engine in accordance with the present invention includes:

a piston whose top portion is provided with a reentrant-type cavity whose diameter becomes smaller towards an aperture edge; and
a fuel injector injecting fuel toward a lip portion of the piston formed at the aperture edge of the cavity;

wherein a fuel spray travel distance Sp at a time of 0.42 ms after the start of the fuel injection with the fuel injector, a cone angle Θ of the fuel spray of the fuel injector and a minimum aperture diameter Dlip at the lip portion of the cavity satisfy the relationship

$$\mathrm{Dlip} = \mathrm{k} \times \mathrm{Sp} \times \sin(\Theta/2)$$

(wherein k = 1.4 to 1.8).

That is to say, in accordance with an aspect of the present invention, fuel is injected from the fuel injector toward the lip portion, the fuel vapor reaches the lip portion in the ignition lag time, and fuel vapor is formed near the lip portion. Therefore, the travel distance Sp (penetration) at 0.42 ms, which is a typical ignition lag time for operation under medium loads, after the start of the fuel injection, is used for setting the minimum aperture diameter Dlip of the cavity. The reason why Sp is multiplied by the factor $\sin(\Theta/2)$ is because the fuel is injected with the cone angle Θ, so that the travel distance of the fuel spray with respect to the horizontal direction is determined.

Thus, since the value of k is set to 1.4 to 1.8, the fuel spray reaches the lip portion in the ignition lag time. The inside of the cavity is hot, so that the vaporization of the fuel spray proceeds simultaneously with the mixing of the fuel spray and air, and fuel vapor is formed near the lip portion. The ignition occurs at a location where the fuel vapor and the air have mixed and the ignition conditions are met within the combustible air-fuel mixture, so that it does not occur at the front end of the spray (near the lip portion) or near the fuel ignition valve, but normally at a location that is somewhat removed in injection direction from the fuel injector (but also removed from the lip portion).

Consequently, the expansive flow of combustion gas caused by this ignition drives the fuel vapor located in front thereof (frontward in injection direction) near the lip portion against the wall surrounding the cavity. As a result, the fuel vapor near the lip portion is driven by the expansive flow toward the bottom of the cavity. Thus, heat spots do not become large at a certain position in the cavity, or heat spots are quickly extinguished, which is advantageous with regard to the reduction of NOx, as explained for the first aspect of the present invention.

When the value of k is lower than 1.4, that is, when the minimum aperture diameter Dlip of the cavity is relatively too small, then the liquid jet of fuel injected with the fuel injector is not sufficiently dissociated before it reaches the lip portion, so that it forms an incomplete spray, and consequently also the formation of the fuel vapor is insufficient, so that the expansive flow of the combustion gas does not act efficiently. Moreover, the core of the fuel spray (that is, the liquid column in the fuel spray injected from the fuel injector or a portion where the fuel concentration is extremely high) collides with the lip portion, deteriorating the combustion (and lowering the output), so that the amount of soot generated increases even though the amount of NO generated is decreased.

On the other hand, when the value of k is larger than 1.8, that is, when Dlip becomes relatively too large, then the distance from the ignition point to the lip portion becomes too long, so that even though the expansive flow of the combustion gas caused by the ignition acts on the fuel vapor in front of it, a large amount of fuel vapor disperses to the environs before it is driven against the lip portion. This means that the expansive flow does not act efficiently to guide the fuel vapor toward the cavity bottom, and the amount of NOx generated increases. In this regard, it is even more preferable that the value of k is 1.5 to 1.7.

It is preferable that the cone angle $\Theta$ of the fuel spray of the fuel injector is 153 ° to 157°.

That is to say, in diesel engines, the fuel injection is ordinarily carried out near the dead point of the compression stroke, and in particular, at a CA of several degrees (for example 2° ATDC) after the upper dead point. In this case, if the cone angle $\Theta$ is less than 153°, the fuel spray is driven towards the bottom of the cavity without hitting the lip portion, and a sufficient dispersion/shifting or early extinguishing of heat spots utilizing the vertical vortex due to the above-described expansive flow is not achieved. That is to say, fuel does not accumulate at the lip portion so that the expansive flow is weak, and therefore also the vertical vortex is weak. If, on the other hand, the cone angle $\Theta$ is greater than 157°, then the fuel spray injected from the fuel injector is directed toward the squish area of around the aperture of the cavity, and the fuel spray tends to combust incompletely, since this squish area tends to dissipate heat to the cylinder head and the cylinder block, leading to an increase of the soot generated. Consequently, in this regard, it is even more preferable that the cone angle $\Theta$ is 154° to 156°.

It is preferable that a bore diameter B of a cylinder through which the piston glides satisfies the equation

$$B = K \times Dlip$$

(wherein K = 1.8 to 2.5).

That is to say, when the minimum aperture diameter Dlip of the cavity is too small compared to the bore diameter B, then this tends to lead to a decrease in the maximum output, and when it is too large, then the forward squish flow attained in the compression stroke becomes weak, so that the fuel spray tends to be directed toward the squish area, and the amount of soot generated increases. In this regard, the value of K is set to 1.8 to 2.5, and it is even preferable to set the value to K to 2.0 to 2.3.

It is preferable that the spray angle $\theta$ of the fuel spray is 15° to 24°.

The larger the spray angle $\theta$ is, the higher is the dispersibility of the fuel spray, but since also the fuel vapor spreads from the lip portion to its environs, the amount of fuel vapor that is driven against the lip portion by the expansive flow of the combustion gas drops correspondingly, which is disadvantageous for the dispersing/shifting or early extinguishing of the heat spots using the expansive flow. On the other hand, when the spray angle $\theta$ becomes too small, the core of the fuel spray becomes correspondingly long, and the fuel spray collides with the lip portion, deteriorating the combustion (leading to lower output), so that even though the amount of NOx generated may decrease, the amount of soot generated increases. Therefore, it is preferable that the spray angle $\theta$ is 15° to 24°, and more preferably 18° to 23°.

It is preferable that the fuel injection pressure of the fuel injector is at least 50 MPa.

In order to let the fuel vapor injected with the fuel injector as described above reach the lip portion in the injection lag time to form a fuel vapor near the lip portion, it is preferable that the fuel injection pressure is at least 50 MPa. More preferably, the fuel injection pressure is at least 80 MPa.

It is preferable that a center portion of the cavity of the piston protrudes upward, such that combustion gas that has moved from the lip portion to the bottom is guided toward the aperture portion at the center of the cavity.

Thus, a vertical vortex is created in which the combustion gas is whirled upward along this protruding portion from the deepest portion of the cavity bottom, and this whirling enhances the mixing of the combustion gas with the oxygen remaining at the center of the cavity, and also enhances the mixing of oxygen with the combustion gas that has flowed into the squish area. Therefore, the air utilization ratio increases, promoting after-burning (oxidation) of soot in the combustion gas and reducing the amount of soot that is exhausted.

When employing a piston in which the center portion of the cavity protrudes upward, then it is preferable that a ratio of a swirl momentum to a fuel spray momentum at the lip portion at a time when the fuel spray injected with the fuel injector first reaches the lip portion of the cavity of the piston is 0.9 to 1.5.

That is to say, the swirl occurring in the bore at the intake stroke contributes to the reduction of the generated amount of soot by enhancing the mixing of the fuel spray or fuel vapor with air in the combustion stroke (expansion stroke). However, when the swirl is too strong, the penetration of the fuel spray becomes small, which is disadvantageous with regard to the after-burning of soot utilizing the vertical vortex caused by the expansive flow of the combustion gas.

Thus, to make advantageous use of the swirl to reduce the amount of soot generated within a range that has no adverse influence on the creation of the vertical vortex, the momentum ratio is set to 0.9 to 1.5. It is even more preferable that the momentum ratio is 1.1 to 1.3.

In accordance with another aspect of the present invention, a method for designing a diesel engine includes:

a piston whose top portion is provided with a reentrant-type cavity whose diameter becomes smaller towards an aperture edge; and
a fuel injector injecting fuel toward a lip portion of the piston formed at the aperture edge of the cavity; the method comprising:

designing such that a fuel spray travel distance Sp at a time of 0.42 ms after the start of the fuel injection with the fuel injector, a cone angle $\Theta$ of the fuel spray of the fuel injector and a minimum aperture diameter Dlip at the lip portion of the cavity satisfy the relationship

$$Dlip = k \times Sp \times \sin(\Theta/2)$$

(wherein k = 1.4 to 1.8).

Consequently, with this aspect of the present invention, utilizing the above-described expansive flow of the combustion gas, an engine can be designed, in which the dispersion/shifting or early extinguishing of heat spots can be achieved.

Fig. **1** is a cross-sectional view showing the structure of a diesel engine in accordance with an embodiment of the present invention.

Figs. **2A** and **2B** are diagrams (cross-sectional views) illustrating the combustion concept of the present invention.

Fig. **3** is a top view of the combustion chamber illustrating the cross-sectional position of Figs. **4** to **10**.

Figs. **4A** and **4B** are diagrams illustrating the cross-sectional fuel distribution, the cross-sectional velocity vectors and the cross-sectional temperature distribution at 6° ATDC determined by simulation for spray angles of 22° and 30°.

Figs. **5A** and **5B** are diagrams illustrating the cross-sectional fuel distribution, the cross-sectional velocity vectors and the cross-sectional temperature distribution at 8° ATDC determined by simulation for spray angles of 22° and 30°.

Figs. **6A** and **6B** are diagrams illustrating the cross-sectional fuel distribution, the cross-sectional velocity vectors and the cross-sectional temperature distribution at 10° ATDC determined by simulation for spray angles of 22° and 30°.

Figs. **7A** and **7B** are diagrams illustrating the cross-sectional fuel distribution, the cross-sectional velocity vectors and the cross-sectional temperature distribution at 12° ATDC determined by simulation for spray angles of 22° and 30°.

Figs. **8A** and **8B** are diagrams illustrating the cross-sectional fuel distribution, the cross-sectional velocity vectors and the cross-sectional temperature distribution at 14° ATDC determined by simulation for spray angles of 22° and 30°.

Figs. **9A** and **9B** are diagrams illustrating the cross-sectional fuel distribution, the cross-sectional velocity vectors and the cross-sectional temperature distribution at 16° ATDC determined by simulation for spray angles of 22° and 30°.

Figs. **10A** and **10B** are diagrams illustrating the cross-sectional fuel distribution, the cross-sectional velocity vectors and the cross-sectional temperature distribution at 18° ATDC determined by simulation for spray angles of 22° and 30°.

Fig. **11** is a graph illustrating the relationship between the nozzle hole diameter and the spray angle θ.

Fig. **12** is a graph illustrating the relationship between the nozzle hole diameter and the spray travel distance (penetration) Sp.

Fig. **13** is a graph illustrating the relationship between the value of k and the generated amount of NO.

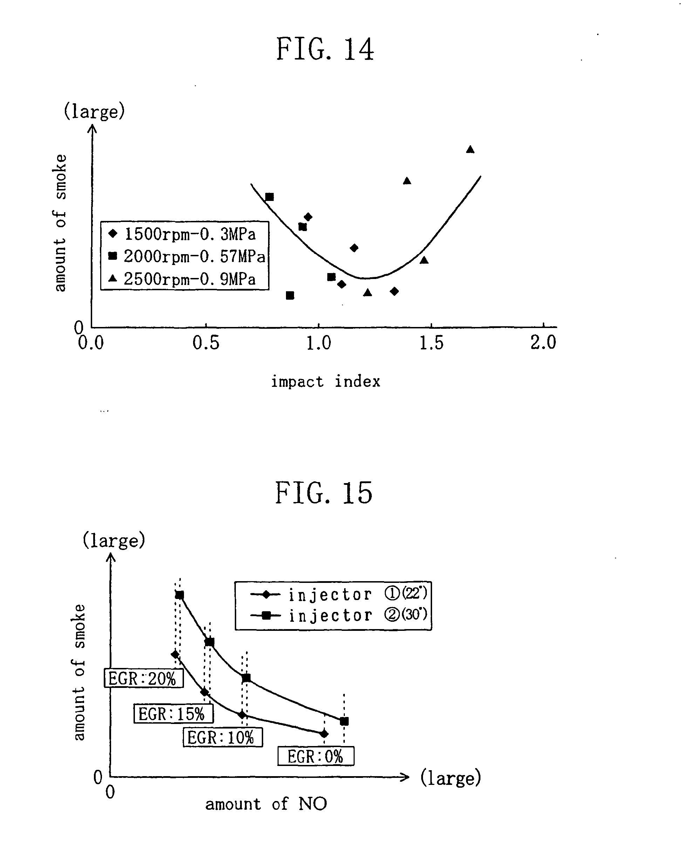

[0045] Fig. **14** is a graph showing the amount of soot exhausted for various values of the ratio of the swirl momentum to the fuel spray momentum.

Fig. **15** is a graph showing the relationship between the spray angle θ and the EGR ratio to the exhausted amount of NOx and the exhausted amount of soot.

The following is a description of preferred embodiments of the present invention with reference to the accompanying drawings.

*Structure of diesel engine combustion chamber*

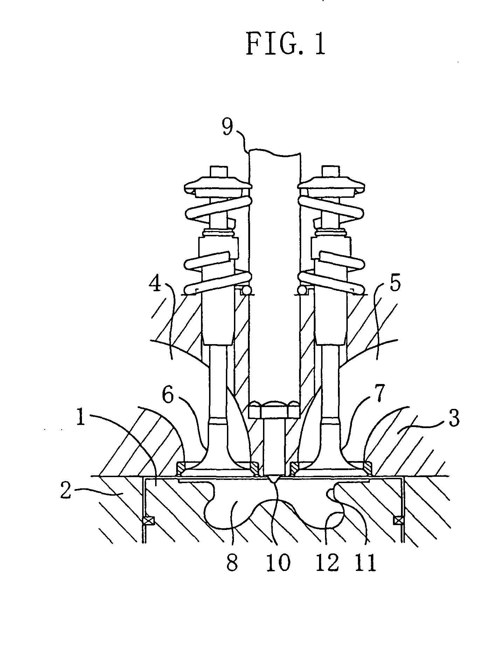

In the structure of the combustion chamber of the direct-injection diesel engine shown in Fig. **1**, numeral **1** denotes a piston, numeral **2** denotes a cylinder block, numeral **3** denotes a cylinder head, numeral **4** denotes an intake port (helical port), numeral **5** denotes an exhaust port, numeral **6** denotes an intake valve, and numeral **7** denotes an exhaust valve. A reentrant-type cavity **8** whose diameter becomes smaller towards the aperture end is formed in the top portion of the piston **1**. The cylinder head **3** is provided with a fuel injector **9**, whose injection nozzle **10** protrudes slightly into the cavity **8** so as to directly inject fuel. The cylinder head **3** is of the flat type and the valves **6** and **7** are of the upright type.

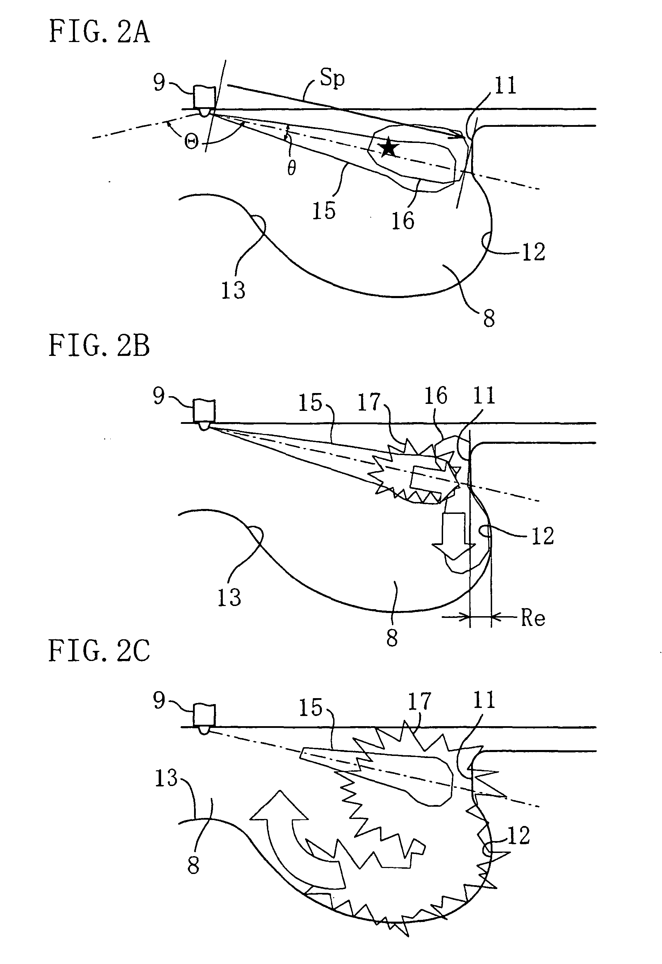

In Fig. **2A** to **2B**, which show a magnified portion of the piston **1**, numeral **11** denotes a ring-shaped lip portion protruding inward at the top surface portion of the piston, forming an aperture edge of the cavity **8**, and numeral **12** denotes a ring-shaped caving portion caving outward in the piston diameter direction in continuation with the lip portion **11**. Furthermore, at the center of the bottom of the cavity **8**, the piston **1** is provided with a convex portion **13** that rises towards the aperture of the cavity **8**.

*Diesel engine design*

The above-described diesel engine is designed as follows.

The fuel spray travel distance Sp at 0.42 ms after the start of fuel injection with the fuel injector **9**, the cone angle $\Theta$ of the fuel spray of the fuel injector **9**, and the minimal aperture (referred to as "lip aperture" in the following) $D_{lip}$ at the lip portion **11** of the cavity **8** satisfy the following relationship:

$$\text{(Equation 1)} \qquad D_{lip} = k \times Sp \times \sin(\Theta/2)$$

In this equation, k is 1.4 to 1.8, and preferably 1.5 to 1.7. It is preferable that the cone angle $\Theta$ is 153° to 157°, more preferably 154° to 156°. The time of 0.42 ms after the start of the fuel injection is a typical ignition lag time for emission operation modes.

The travel distance Sp is determined by a constant volume experiment (with a fuel injection pressure of 80 MPa, an atmospheric pressure of 2.5 MPa and a temperature of 20°C). If no data from a constant volume experiment are available, then the travel distance Sp can be estimated from the Hiroyasu equation. The Hiroyasu equation is an empiric equation that relates the travel distance Sp (spray penetration) to the nozzle diameter of the fuel injector **9**:

$$Sp = Spb + 2.95 \times (\Delta P \times 10^{6}/ \rho f)^{0.25} \times (Dn \times (t{-}tb))^{0.5}$$

$$Spb = 0.39 \times (2 \times \Delta P \times 10^{6}/\rho f)^{0.5} \times tb$$

$$tb = 28.65 \times (\rho f \times Dn \times 10^{-3})/(\rho A \times \Delta P \times 10^{6})^{0.5}/10^{-3}$$

In these equations, $\Delta P$ is the pressure difference (MPa) between the container pressure and the injection pressure, $\rho f$ is the density (kg/m$^3$) of light oil, Dn is the nozzle diameter (mm), t is the time from the start of the fuel injection (0.42 ms), and $\rho A$ is density of the air in the container.

The cylinder bore diameter B satisfies the following relationship:

$$\text{(Equation 2)} \qquad B = K \times Dlip$$

Herein, it is preferable that K is 1.8 to 2.5, more preferably 2.0 to 2.3.

For example, when the travel distance Sp is 27 mm, and the cone angle $\Theta$ is 154°, then the lip diameter Dlip is set to 38.94 to 44.20 mm, and the bore diameter B is set to 77.87 to 100.33 mm. The height of the convex portion **13** should be about 0.2 to 0.25 times the lip diameter Dlip.

The spray angle $\theta$ is preferably 15° to 24°, and more preferably 18° to 23°. The fuel injection pressure P of the fuel injector **9** is preferably at least 50 MPa, and more preferably at least 80 MPa. An upper limit of the injection pressure may be for example 150 MPA or even 200 MPa.

The ratio of the swirl momentum to the momentum of the fuel spray at the lip portion at the time when the fuel spray injected with the fuel injector **9** first reaches the lip portion of the piston cavity is preferably 0.9 to 1.5, and more preferably 1.1 to 1.3. This momentum ratio can be determined by the following equation:

$$\text{(Equation 3)} \qquad \text{momentum ratio} = ((\rho a/\rho ao) \times Va)/((\rho s/\rho so) \times Vs)$$

Herein, $\rho a$ is the replenished air density, $\rho ao$ is the air density in the reference state, Va is the swirl speed at the lip portion **11** at the upper dead point of the compression stroke, $\rho s$ is the density of the fuel spray in the constant volume experiment, $\rho so$ is the density of the fuel spray in the reference state, and Vs is the spray speed when the lip portion is reached in the constant volume experiment. The reference state is the state for 20°C and 1 atm (0.1013 MPa).

Herein, $\rho a/\rho ao = (Pin/101.3)/(Tin/293.3)$, and $Va = \rho a \times SRi \times (Dlip/(B/2))^2 \times (N \times 2\pi/60) \times Dlip$. $\rho s/\rho so$ can be set to 1.

Herein, Pin is the pressure (kPa) in the intake manifold, Tin is the temperature in the intake manifold, SRi is the swirl ratio during the rig test, and N is the engine revolution speed (rpm).

*Combustion Concept*

Figs. **2A** to **2C** illustrate the combustion concept of the present invention.

As shown by the state at the ignition lag time in Fig. **2A**, fuel is injected from the fuel injector **9** toward the lip portion **11** of the piston **1**, when substantially no vertical vortex (flow from the lip portion **11** of the cavity **8** over the deepest portion and the convex portion **13** again to the lip portion) has been established in the cavity **8**. During this ignition lag time of the fuel, the fuel spray **15** reaches the lip portion **11** and forms a region of fuel vapor **16** near the lip portion **11**, which is ignited at the front with respect to the fuel injection direction. The ignition point is marked by a ★ in Fig. **2A**.

In this situation, it is possible to form the region of fuel vapor **16** near the lip portion **11** by increasing the spray penetration. This is advantageous with regard to the fact that a large amount of fuel vapor **16** is guided toward the caving portion **12** due to the expansive flow explained below. Furthermore, with regard to forming the region of the fuel vapor **16** near the lip portion **11**, it is advantageous to increase the cone angle $\Theta$ (set $\Theta$ to 153° to 157°).

As shown by the initial combustion state in Fig. **2B**, due to the expansive flow of the combustion gas **17** caused by the ignition, the fuel vapor **16** hits the lip portion **11** in front of the ignition position. Thus, the fuel vapor **16** is guided from the lip portion **11** to the caving portion **12**, and further to the bottom of the cavity **8**, creating a vertical vortex.

In this situation, when the spray penetration is increased, the expansive flow in forward spray direction increases as well, which is advantageous to promote the vertical vortex. Furthermore, with regard to letting the expansive flow hit hardly against the wall surrounding the cavity and guiding the fuel vapor towards the bottom of the cavity, it is advantageous that the lip diameter Dlip is small. However, when the lip diameter Dlip is too small, the maximum output of the engine becomes low, and thus it is preferable that the lip diameter Dlip is larger than 1/2 the bore diameter B.

As shown by the advanced combustion stage in Fig. **2C**, the convex portion **13** in the center of the cavity promotes the whirling of the combustion gas **17** from the deepest site of the cavity bottom along the rising walls of the convex portion **13**.

Thus, until the end of the fuel injection, the maximum temperature site in the cavity **8** shifts from the lip portion **11** toward the bottom portion of the cavity **8**. Consequently, heat spots do not become large at certain sites within the cavity, and heat spots are extinguished quickly, thus leading to a reduction of NOx. Furthermore, due to the whirling up during advanced combustion, the combustion gas **17** mixes with the oxygen remaining at the upper central portion of the cavity, and the combustion gas **17** flows into the squish area, so that the air utilization ratio is increased, promoting the after-burning of soot in the combustion gas **17**, and decreasing the amount of emitted soot.

*Combustion simulation*

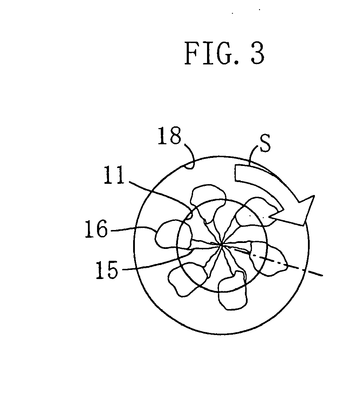

The following is an explanation of the results of a combustion simulation. The cross-sectional fuel distribution, the cross-sectional velocity vectors and the cross-sectional temperature distribution of the combustion chamber formed by the piston **1**, the cylinder block **2** and the cylinder head **3** were determined with the cross-section through the center of the bore **18** and extending substantially in the direction of the fuel injection, as shown in Fig. **3**. In Fig. **3**, S denotes the swirl.

The calculation parameters are:

| | |
|---|---|
| engine revolution speed: | 2000 rpm |
| average effective pressure: | 0.57 MPa |
| fuel injector **9**: | injector ① (nozzle hole diameter: 0.15 mm X 6), |
| | injector ② (nozzle hole diameter: 0.17 mm X 6) |
| injection pressure: | 80 MPa |
| injection timing: | 2° ATDC |
| no EGR | |

The spray angle θ of the injector ① is 22°, the spray angle θ of the injector ② is 30°, and the cone angle Θ is in both cases 154°.

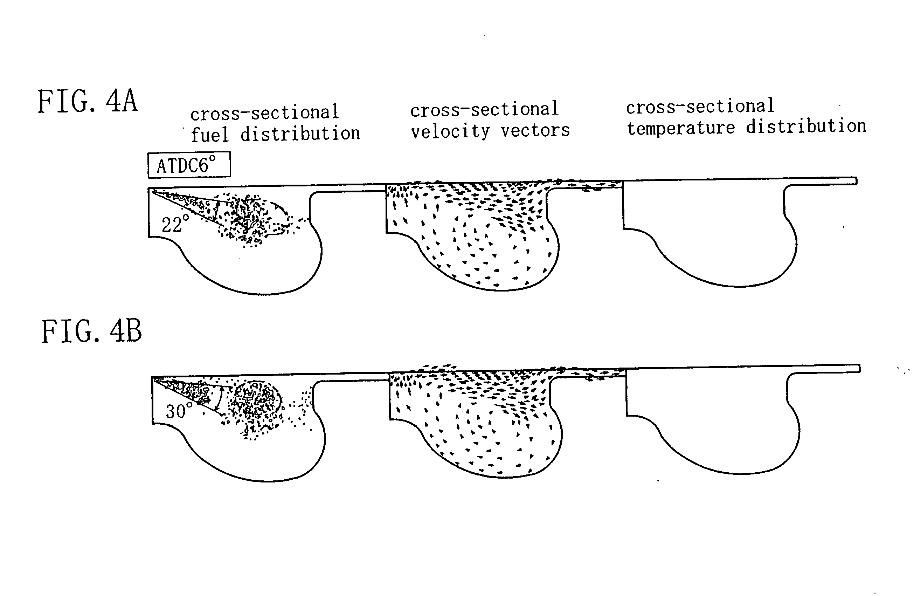

Figs. **4** to **10** illustrate the results of the numerical simulation. In these drawings, the results for the injector ① are shown at the top, and the results for the injector ② are shown at the bottom. In the cross-sectional fuel distribution in these drawings, the region of the fuel vapor is represented by a dash-dotted line. In the cross-sectional temperature distribution in these drawings, the temperature distribution is represented by isothermal lines, and the temperature increases toward the inner side.

At 6° ATDC as shown in Fig. **4**, the injection angle of 22° and the injection angle of 30° differ in that the degree of dispersion of the fuel spray of the former is lower due to the difference of the injection angle. On the other hand, no difference could be observed between the two regarding the velocity distribution, and in both cases almost no vertical vortex could be observed.

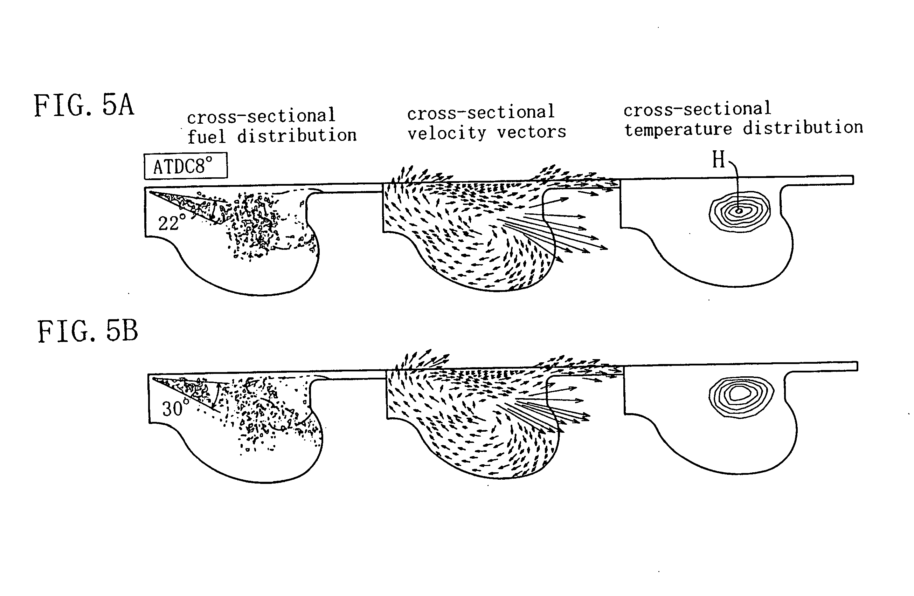

At 8° ATDC as shown in Fig. **5**, the fuel spray hits the lip portion **11** at both spray angles of 22° and 30°, and a region of fuel vapor is formed near the lip portion **11**. Subsequently, an expansive flow of the combustion gas is created by ignition, and the front fuel vapor is blown towards the wall surrounding the cavity, in particular the border portion between the lip portion **11** and the caving portion **12**.

Comparing the spray angles 22° and 30°, it can be seen that at 22° the fuel vapor spreads better to the caving portion that at 30°. This is because for 22° the generation of the expansive flow toward the border portion and the caving portion **12** is stronger than for 30°, as becomes clear from the cross-sectional velocity distribution. In both cases the temperature of the ignition point is high.

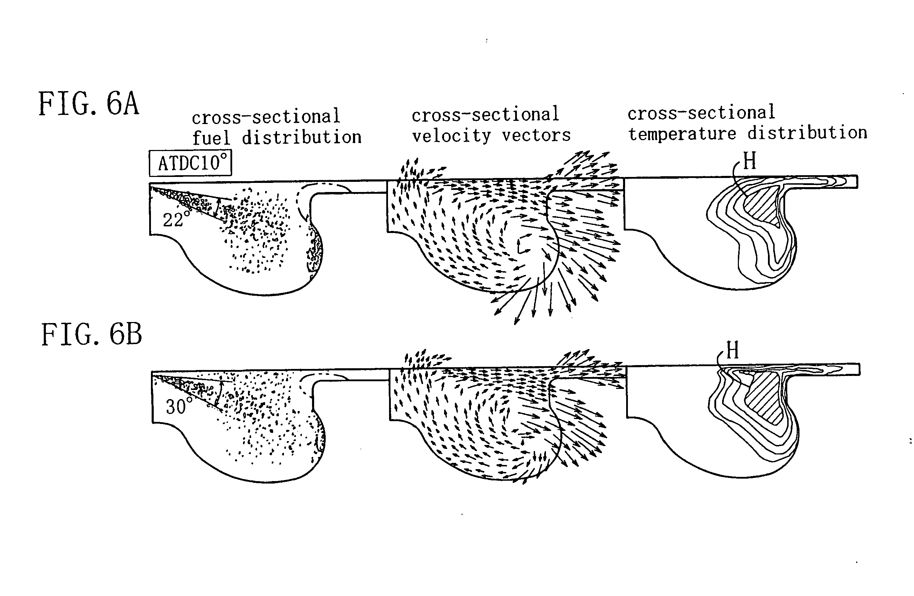

At 10° ATDC as shown in Fig. **6**, the expansive flow for a spray angle of 22° is strong, so that a portion of the fuel vapor is blown from the lip portion **11** along the wall surrounding the cavity toward the caving portion **12**, but at a spray angle of 30° the fuel vapor blown onto the caving portion **12** is less than at a spray angle of 22°.

Therefore, at a spray angle of 22°, the flame grows considerably from the lip portion **11** toward the caving portion **12** due to the fuel vapor blown against the caving portion **12**, and the expansive flow of the combustion gas whirls further from the caving portion **12** to the deepest site of the cavity bottom, as indicated by the cross-sectional velocity distribution. Then, as can be seen in the cross-sectional temperature distribution, a heat spot H above a predetermined temperature extends toward the deepest site of the cavity bottom. On the other hand, with a spray angle of 30°, the whirling of the expansive flow of combustion gas is weaker than at a spray angle of 22°, and consequently, the heat spot H extends less toward the cavity bottom.

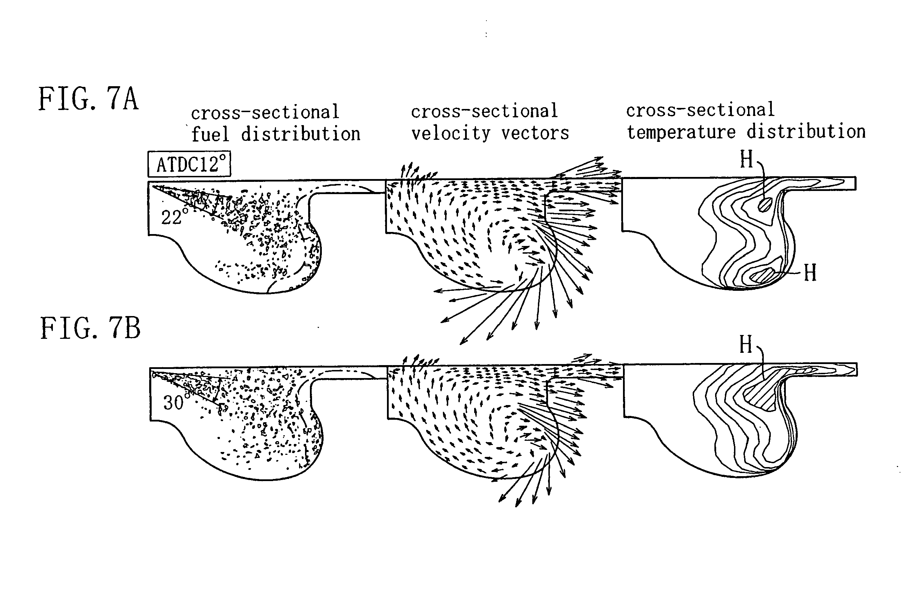

At 12° ATDC as shown in Fig. **7**, the fuel vapor spreads further to the deepest site of the cavity bottom at a spray angle of 22°, and also the whirling of the expansive flow of the combustion gas becomes even stronger, so that the growth of the vertical vortex can be observed. Thus, the heat spot H near the lip portion **11** becomes smaller, and another heat spot appears at the bottom of the cavity. At a spray angle of 30°, on the other hand, the spreading of the fuel vapor toward the cavity bottom is weaker than at a spray angle of 22°, and also the whirling of the expansive flow of the combustion gas is weak. Furthermore, the heat spot H near the lip portion **11** has not yet become smaller.

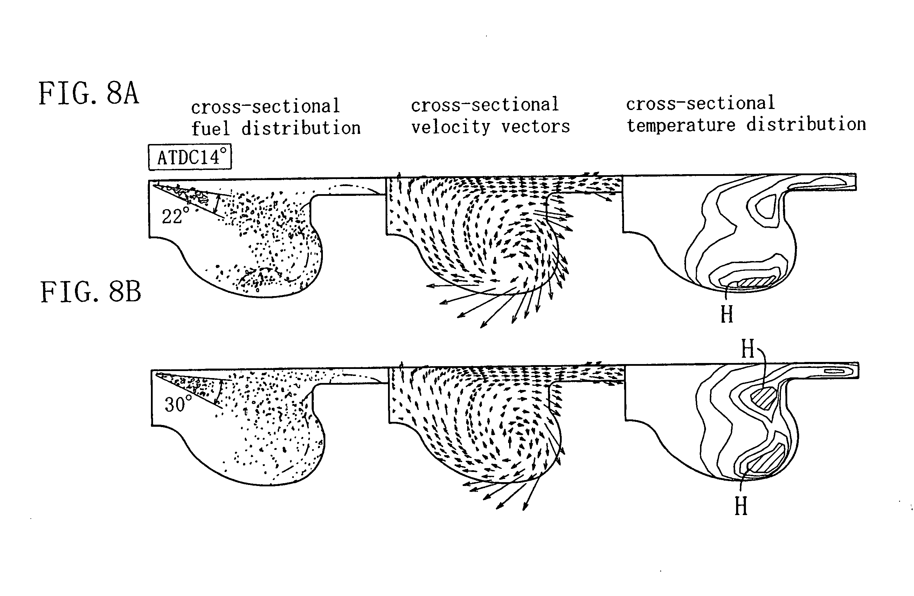

At 14° ATDC as shown in Fig. **8**, the most part of the fuel vapor shifts to the deepest site of the cavity bottom at a spray angle of 22°, and from there, the expansive flow of the combustion gas along the convex portion toward the aperture center of the cavity **8** becomes large, and growth of the vertical vortex can be observed. Moreover, the heat spot H near the lip portion **11** is almost completely extinguished. That is to say, the maximum temperature site inside the cavity **8** shifts completely from the lip portion **11** toward the bottom of the cavity **8**. At a spray angle of 30°, on the other hand, the spread of the fuel vapor toward the cavity bottom is smaller than for a spray angle of 22°, and also the whirling of the expansive flow of the combustion gas is smaller. Also, a heat spot H appears at the bottom of the cavity **8**, but the heat spot H near the lip portion **11** is still not completely extinguished.

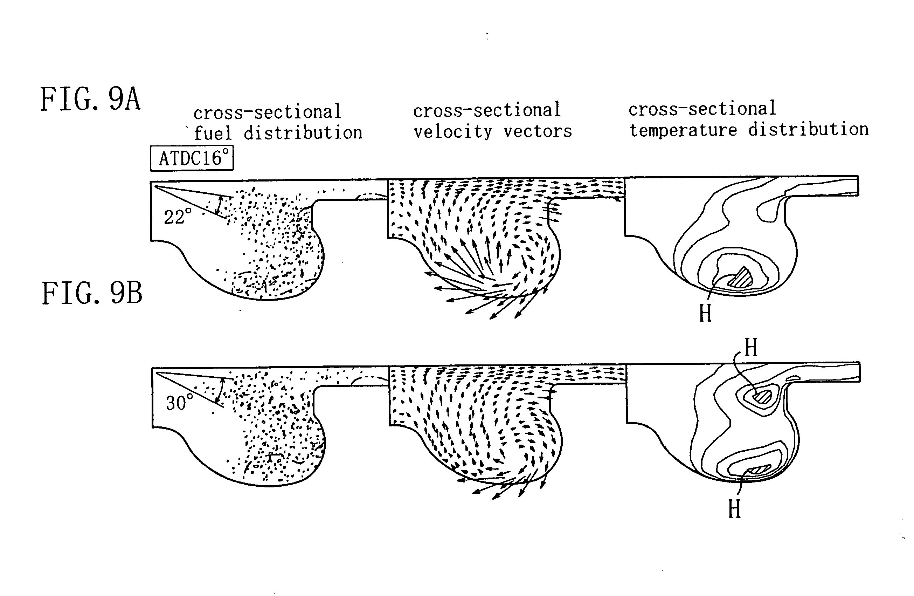

At 16° ATDC as shown in Fig. **9**, the fuel injection stops, and at a spray angle of 22°, the position of the fuel vapor shifts toward the convex portion **13**, and the amount of fuel vapor becomes small. As the fuel vapor shifts, the expansive flow of the combustion gas swirls upward along the wall surrounding the convex portion **13**, and the heat spot H shifts closer to the convex portion **13**. At a spray angle of 30°, however, the shift of the fuel vapor toward the convex portion **13** is smaller than at a spray angle of 22°, and also the upward swirling of the expansive flow of the combustion gas is weak. Furthermore, the heat spot H near the lip portion **11** is still not completely extinguished.

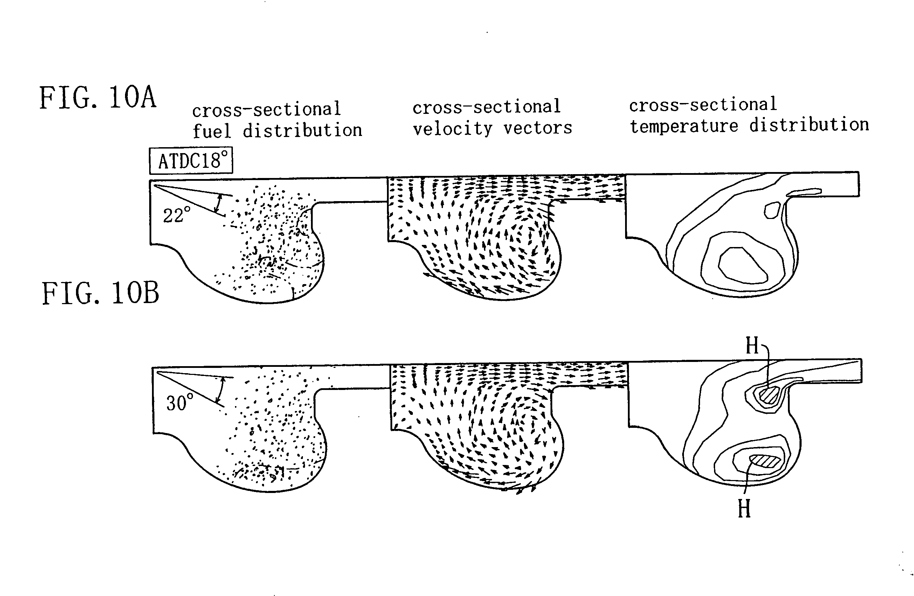

At 18° ATDC as shown in Fig. **10**, only a scant amount of the fuel vapor is left at a spray angle of 22°, and also the vertical vortex becomes weak, but there is a flow from the bottom of the cavity **8** to the aperture of the cavity **8** and further toward the squish area. The heat spot H at the bottom of the cavity **8** is almost extinguished. At a spray angle of 30°, on the other hand, relatively much fuel vapor is left at the bottom of the cavity **8**, and also the heat spot H near the lip portion **11** is still not completely extinguished.

In this manner, at a spray angle of 22°, the expansive flow of the combustion gas at the initial stage of the combustion is larger than at a spray angle of 30°, and the fuel vapor near the lip portion **11** is driven more strongly against the wall surrounding the cavity and transported toward the caving portion **12**. Therefore, the expansive flow of the combustion gas grows from the lip portion **11** through the caving portion **12** to the cavity bottom, and a heat spot H appears near the cavity bottom, while the heat spot H near the lip portion is extinguished relatively quickly. Furthermore, due to the promotion of the vertical vortex by this expansive flow, also the heat spot H near the cavity bottom is extinguished quickly. From this, it can be seen that the amount of NO generated is smaller at a spray angle of 22° than at a spray angle of 30°.

Furthermore, at a spray angle of 22°, the combustion gas is swirled upward along the convex portion **13** by the above-mentioned strong vertical vortex, and the contact to the air at the center of the cavity **8** is enhanced, and moreover, the contact to the air at the squish area is enhanced. From this, it can be seen that the after-burning of soot in the combustion gas proceeds, so that the soot exhaustion amount becomes smaller.

*Relationship between nozzle hole diameter, injection angle θ and penetration*

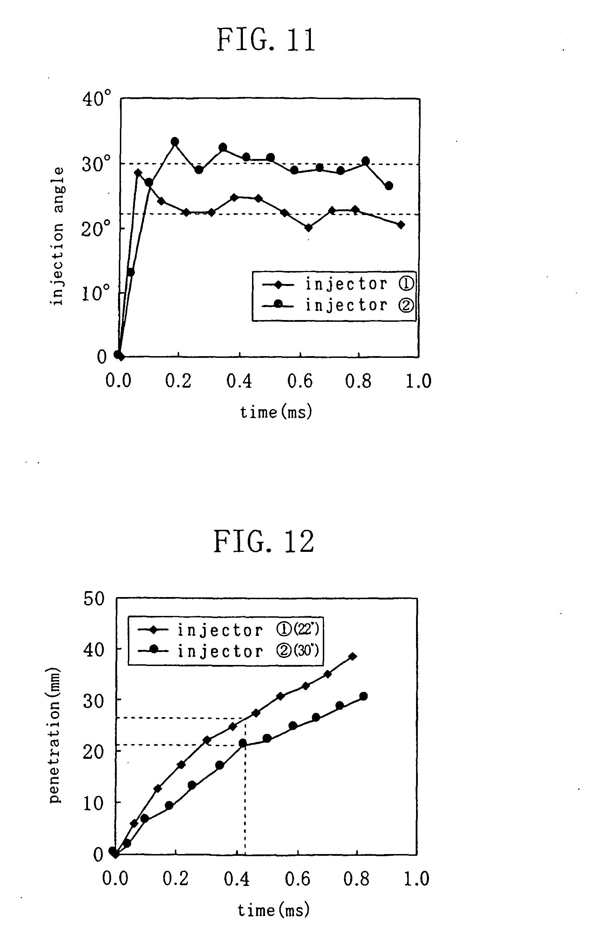

For the fuel injector ① with a nozzle hole diameter of 0.15 mm and the fuel injector ② with a nozzle hole diameter of 0.17 mm, the spray angle θ and the spray travel distance (penetration) Sp were determined by a constant volume experiment (with an injection pressure of 70 MPa, an atmospheric pressure of 2.5 MPa and an atmospheric temperature of 293 K). The results for the spray angle θ are shown in Fig. **11**, and the results for the spray travel distance Sp are shown in Fig. **12**.

As shown in Fig. **11**, the spray angle θ hardly changes over time. The spray angle θ of the injector ① with a nozzle hole diameter of 0.15 mm is about 22°, and the spray angle θ of the injector ② with a nozzle hole diameter of 0.17 mm is about 30°. As shown in Fig. **12**, the spray travel distance Sp for an ignition lag time of 0.42 ms was 27 mm for the injector ① with the nozzle hole diameter of 0.15 mm and 21 mm for the injector ② with the nozzle hole diameter of 0.17 mm.

*The value of k*

The following is an explanation of the influence that the value of k has on the amount of NO generated.

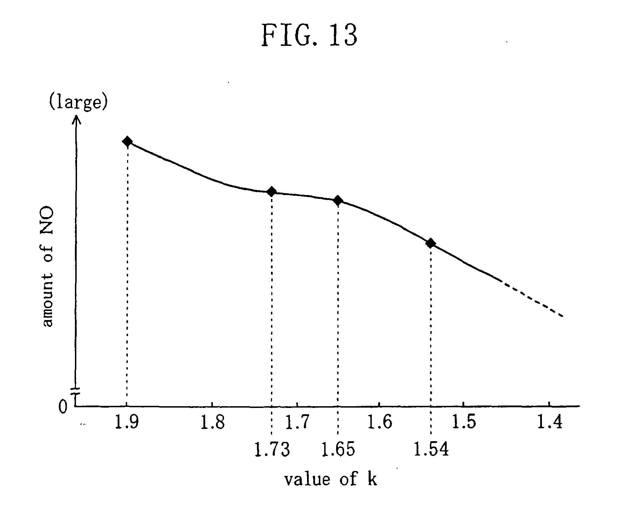

As is clear from Equation **1**, the size of k is reflected by the size of the lip diameter Dlip, and it influences the strength of the vertical vortex when the travel distance Sp is constant. The amount of NO generated for different values of k was determined. The results are shown in Fig. **13**.

In Fig. **13**, the data for k = 1.9 relate to the case of a pan-type (i.e. flat) cavity without the convex portion **13** at the center of the cavity in which the reentrant rate R is 1. It should be noted that the reentrant rate R is the value of Dlip/Dmax, when Dmax is the maximum inner diameter of the cavity **8**. The data for k = 1.73 relate to a reentrant type with a reentrant rate R of 1.73/1.9 and having a convex portion **13** at the center of the cavity. The data for k = 1.65 and k = 1.54 also relate to a reentrant type in which the caving amount Re (see Fig. **2B**) of the caving portion **12** from the lip portion **11** is the same as in the cavity with k = 1.73.

As shown in Fig. **13**, the amount of NO generated decreases as the value of k is reduced. This is because by decreasing the lip diameter, the expansive flow of the combustion gas at the initial stage of combustion acts strongly on the wall surrounding the cavity, promoting the vertical vortex, making the distance between the caving portion **12** and the convex portion **13** smaller, and facilitating the creation of the vertical vortex. However, when the value of k becomes too small, the core of the fuel spray collides with the lip portion **11**, and combustion deteriorates (lowering output), so that even though the amount of NO generated is small, the amount of soot generated increases. Consequently, in order to decrease the amount of NO generated while suppressing a lowering of the output and the formation of soot, the value of k is preferably 1.4 to 1.8, more preferably 1.5 to 1.7.

*Influence of the momentum ratio of swirl/fuel spray on the soot exhaustion amount*

The amount of soot exhausted was determined for various values of the ratio of the momentum of the swirl to the momentum of the fuel spray at the lip portion **11** of the cavity **8**. This measurement was performed by setting the cone angle to 154°, the lip diameter to 43.4 mm, the bore diameter to 86 mm, the nozzle hole diameter to 0.15 mm (injector ① with a spray angle of 22°), for an engine revolution speed of 1500 rpm and an average effective pressure of 0.3 MPa, for an engine revolution speed of 2000 rpm and an average effective pressure of 0.57 MPa, and for an engine revolution speed of 2500 rpm and an average effective pressure of 0.9 MPa. The results are shown in Fig. **14**.

As shown in Fig. **14**, even though there are some variations, the soot exhaustion amount increases for the case that the momentum ratio becomes small as well as for the case that the momentum ratio becomes large, with the momentum ratio of about 1.2 in the center, as indicated by the line marking that tendency in Fig. **14**. The reason why the soot exhaustion amount increases as the momentum ratio decreases is because sufficient mixing of the fuel with the air due to swirling is not attained, so that the amount of soot generated increases. The reason why the soot exhaustion amount increases as the momentum ratio increases is because it becomes difficult to form the above-described vertical vortex due to the swirling, and the after-burning (oxidation) of soot in the combustion gas does not proceed.

Consequently, it can be seen from Fig. **14** that when the momentum ratio is within a certain range around 1.2 in the center, the after-burning of soot can be promoted by the vertical vortex while suppressing the formation of soot by swirling, and the momentum ratio is thus preferably set to 0.9 to 1.5, more preferably 1.1 to 1.3.

*Influence of the spray angle θ and the EGR rate on the NOx exhaustion amount and the soot exhaustion amount*

At a cone angle of 154°, a lip diameter of 43.4 mm, a bore diameter of 86 mm, an engine revolution speed of 2000 rpm, and an average effective pressure of 0.57 MPa, the NOx exhaustion amount and the soot exhaustion amount were measured for various EGR rates (ratio between the exhaust amount (EGR amount) circulated into the intake system from the engine exhaust system to the total intake amount), for the injector ① (with a nozzle hole diameter of 0.15 mm and a spray angle of 22°) and the injector ② (with a nozzle hole diameter of 0.17 mm and a spray angle of 30°). The results are shown in Fig. **15**.

As shown in Fig. **15**, when using the injector ① with a nozzle hole diameter of 0.15 mm and a spray angle of 22°, the NOx exhaustion amount and the soot exhaustion amount are both smaller than when using the injector ② with a nozzle hole diameter of 0.17 mm and a spray angle of 30°. However, as the EGR rate increases, the effect of decreasing the NOx due to the smaller spray angle θ is almost not attained.

**Claims**

1. A method for fuel combustion in a diesel engine in which a reentrant-type cavity whose diameter becomes smaller towards an aperture edge is provided at a top portion of a piston, the method **characterized by** comprising the steps of:

   injecting fuel with a fuel injector toward a lip portion of the piston formed at the aperture edge of the cavity;
   forming a region of fuel vapor near the lip portion by letting the fuel spray injected by the fuel injector reach the lip portion in an ignition lag time;
   igniting the fuel at the front in direction of the fuel injection of the fuel injector, and guiding, by an expansive flow of combustion gas due to the ignition, the fuel vapor in front of the ignition position toward a bottom of the cavity along a wall surrounding the cavity; and
   until fuel injection is terminated, letting a maximal temperature site within the cavity shift from the lip portion toward the bottom portion of the cavity.

2. A diesel engine, comprising:

   a piston whose top portion is provided with a reentrant-type cavity whose diameter becomes smaller towards an aperture edge; and
   a fuel injector injecting fuel toward a lip portion of the piston formed at the aperture edge of the cavity;
   **characterized in that** a fuel spray travel distance Sp at a time of 0.42 ms after the start of the fuel injection with the fuel injector, a cone angle Θ of the fuel spray of the fuel injector and a minimum aperture diameter Dlip at the lip portion of the cavity satisfy the relationship

$$\text{Dlip} = k \times Sp \times \sin(\Theta/2)$$

   wherein k = 1.4 to 1.8.

3. The diesel engine according to claim 2, **characterized in that** the cone angle $\Theta$ of the fuel spray of the fuel injector is 153 ° to 157° .

4. The diesel engine according to claim 2, **characterized in that** a bore diameter B of a cylinder through which the piston glides satisfies the equation

$$B = K \times Dlip$$

wherein K = 1.8 to 2.5.

5. The diesel engine according to claim 2, **characterized in that** the spray angle $\theta$ of the fuel spray is 15 ° to 24°.

6. The diesel engine according to claim 2, **characterized in that** a fuel injection pressure of the fuel injector is at least 50 MPa.

7. The diesel engine according to claim 2, **characterized in that** a center portion of the cavity of the piston protrudes upward, such that combustion gas that has moved from the lip portion to the bottom is guided toward the aperture portion at the center of the cavity.

8. The diesel engine according to claim 7, **characterized in that** a ratio of a swirl momentum to a fuel spray momentum at the lip portion at a time when the fuel spray injected with the fuel injector first reaches the lip portion is 0.9 to 1.5.

9. A method for designing a diesel engine comprising:

a piston whose top portion is provided with a reentrant-type cavity whose diameter becomes smaller towards an aperture edge; and
a fuel injector injecting fuel toward a lip portion of the piston formed at the aperture edge of the cavity; the method being **characterized by** comprising:

designing such that a fuel spray travel distance Sp at a time of 0.42 ms after the start of the fuel injection with the fuel injector, a cone angle $\Theta$ of the fuel spray of the fuel injector and a minimum aperture diameter Dlip at the lip portion of the cavity satisfy the relationship

$$Dlip = k \times Sp \times \sin(\Theta/2)$$

wherein k = 1.4 to 1.8.

**Patentansprüche**

1. Verfahren zur Kraftstoffverbrennung in einem Dieselmotor, bei dem ein einspringender Hohlraum, dessen Durchmesser zum Rand der Öffnung hin kleiner wird, in einem oberen Abschnitt eines Kolbens vorgesehen ist, wobei das Verfahren **dadurch gekennzeichnet ist, dass** es die folgenden Schritte umfasst:

Einspritzen von Kraftstoff mit einem Kraftstoffinjektor in Richtung zu einem am Öffnungsrand des Hohlraums gebildeten Lippenabschnitt des Kolbens;
Bilden eines Bereichs von Kraftstoffdampf in der Nähe des Lippenabschnitts, indem man den durch den Kraftstoffinjektor eingespritzten Kraftstoffstrahl den Lippenabschnitt in einer Zündverzugszeit erreichen lässt;
Zünden des Kraftstoffs vorn in Richtung der Kraftstoffeinspritzung des Kraftstoffinjektors und, durch eine breitflächige Strömung von Verbrennungsgas infolge der Zündung, Führen des Kraftstoffdampfes vor der Zündposition zu einem Boden des Hohlraums längs einer den Hohlraum umgebenden Wand; und
bis zum Ende der Kraftstoffeinspritzung lässt man einen Ort maximaler Temperatur in dem Hohlraum von dem Lippenabschnitt zu dem Bodenabschnitt des Hohlraums wandern.

2. Dieselmotor, der Folgendes umfasst:

einen Kolben, dessen oberer Abschnitt mit einem einspringenden Hohlraum versehen ist, dessen Durchmesser zum Rand der Öffnung hin kleiner wird; und

einen Kraftstoffinjektor, der Kraftstoff in Richtung zu einem am Öffnungsrand des Hohlraums gebildeten Lippenabschnitt einspritzt;

**dadurch gekennzeichnet, dass** eine Wegstrecke Sp des Kraftstoffstrahls zu einer Zeit von 0,42 ms nach Beginn der Kraftstoffeinspritzung mit dem Kraftstoffinjektor,

ein Kegelwinkel $\Theta$ des Kraftstoffstrahls des Kraftstoffinjektors und ein Mindestöffnungsdurchmesser Dlip an dem Lippenabschnitt des Hohlraums der folgenden Beziehung genügen:

$$Dlip = k \times Sp \times \sin(\Theta/2)$$

worin K = 1,4 bis 1,8.

3. Dieselmotor nach Anspruch 2, **dadurch gekennzeichnet, dass** der Kegelwinkel $\Theta$ des Kraftstoffstrahls des Kraftstoffinjektors 153° bis 157° beträgt.

4. Dieselmotor nach Anspruch 2, **dadurch gekennzeichnet, dass** ein Bohrungsdurchmesser B eines Zylinders, durch den der Kolben gleitet, der folgenden Gleichung genügt:

$$B = K \times Dlip$$

worin K = 1,8 bis 2,5.

5. Dieselmotor nach Anspruch 2, **dadurch gekennzeichnet, dass** der Strahlwinkel $\theta$ des Kraftstoffstrahls 15° bis 24° beträgt.

6. Dieselmotor nach Anspruch 2, **dadurch gekennzeichnet, dass** ein Kraftstoffeinspritzdruck des Kraftstoffinjektors mindestens 50 MPa beträgt.

7. Dieselmotor nach Anspruch 2, **dadurch gekennzeichnet, dass** ein mittlerer Abschnitt des Hohlraums des Kolbens nach oben ragt, so dass Verbrennungsgas, das sich von dem Lippenabschnitt zum Boden bewegt hat, zu dem Öffnungsabschnitt in der Mitte des Hohlraums geführt wird.

8. Dieselmotor nach Anspruch 7, **dadurch gekennzeichnet, dass** ein Verhältnis eines Verwirbelungsmoments zu einem Kraftstoffstrahlmoment an dem Lippenabschnitt zu einer Zeit, wo der mit dem Kraftstoffinjektor eingespritzte Kraftstoffstrahl zuerst den Lippenabschnitt erreicht, 0,9 bis 1,5 beträgt.

9. Verfahren zur Konstruktion eines Dieselmotors, der Folgendes umfasst:

einen Kolben, dessen oberer Abschnitt mit einem einspringenden Hohlraum versehen ist, dessen Durchmesser zum Rand der Öffnung hin kleiner wird; und

einen Kraftstoffinjektor, der Kraftstoff in Richtung zu einem am Öffnungsrand des Hohlraums gebildeten Lippenabschnitt des Kolbens einspritzt; wobei das Verfahren **dadurch gekennzeichnet ist, dass** es Folgendes umfasst:

Konstruieren in einer Weise, dass eine Wegstrecke Sp des Kraftstoffstrahls zu einer Zeit von 0,42 ms nach Beginn der Kraftstoffeinspritzung mit dem Kraftstoffinjektor, ein Kegelwinkel $\Theta$ des Kraftstoffstrahls des Kraftstoffinjektors und ein Mindestöffnungsdurchmesser Dlip am Lipppenabschnitt des Hohlraums der folgenden Beziehung genügen:

$$Dlip = kxSpxsin(\Theta/2)$$

worin k = 1,4 bis 1,8.

**Revendications**

**1.** Procédé de combustion de carburant dans un moteur Diesel dans lequel une cavité du type rentrant dont le diamètre diminue vers une arête d'ouverture est prévue à une partie supérieure d'un piston, le procédé étant **caractérisé en ce qu'**il comprend les étapes suivantes :

injecter du carburant à l'aide d'un injecteur de carburant vers une partie de bord du piston formée à l'arête d'ouverture de la cavité ;
former une zone de vapeur de carburant près de la partie de bord en laissant le jet de carburant injecté par l'injecteur de carburant atteindre la partie de bord dans une période de délai d'inflammation;
enflammer le carburant à l'avant dans le sens de l'injection de carburant de l'injecteur de carburant, et guidant, par l'intermédiaire d'un flux expansif de gaz de combustion provoqué par l'inflammation, la vapeur de carburant à l'avant de la position d'inflammation vers un fond de la cavité le long d'une paroi qui entoure la cavité ; et, jusqu'à ce que l'injection de carburant soit terminée, permettre qu'un endroit présentant la température maximale se déplace de la partie de bord vers la partie de fond de la cavité.

**2.** Moteur Diesel comprenant :

un piston dont la partie supérieure est munie d'une cavité du type rentrant dont le diamètre diminue vers une arête d'ouverture ; et
un injecteur de carburant qui injecte du carburant vers une partie de bord du piston formée à l'arête d'ouverture de la cavité ;
**caractérisé en ce qu'**une distance parcourue par le jet de carburant Sp dans un délai de 0,42 ms après le début de l'injection de carburant à l'aide de l'injecteur de carburant, un angle de cône θ du jet de carburant provenant de l'injecteur de carburant et un diamètre d'ouverture minimal Dlip à la partie de bord de la cavité satisfont la relation

$$Dlip = k \times Sp \times sin(\theta/2)$$

k étant = 1,4 à 1,8.

**3.** Moteur Diesel selon la revendication 2, **caractérisé en ce que** l'angle de cône θ du jet de carburant provenant de l'injecteur de carburant est de 153° à 157°.

**4.** Moteur Diesel selon la revendication 2, **caractérisé en ce qu'**un diamètre d'alésage B d'un cylindre à travers lequel le piston glisse satisfait l'équation

$$B = K \times Dlip$$

k étant = 1,8 à 2,5.

**5.** Moteur Diesel selon la revendication 2, **caractérisé en ce que** l'angle de jet θ du jet de carburant est de 15° à 24°.

**6.** Moteur Diesel selon la revendication 2, **caractérisé en ce qu'**une pression d'injection du carburant provenant de l'injecteur de carburant est d'au moins 50 MPa.

**7.** Moteur Diesel selon la revendication 2, **caractérisé en ce qu'**une partie centrale de la cavité du piston est en saillie vers le haut, de manière que du gaz de combustion qui s'est déplacé de la partie de bord vers le fond soit guidé vers la partie d'ouverture située au centre de la cavité.

**8.** Moteur Diesel selon la revendication 7, **caractérisé en ce qu'**un rapport entre une quantité de mouvement du tourbillon et une quantité de mouvement du jet de carburant situées à la partie de bord, à un moment quand le jet de carburant injecté à l'aide de l'injecteur de carburant initialement atteint la partie de bord, est de 0,9 à 1,5.

**9.** Procédé de conception d'un moteur comprenant :

un piston dont la partie supérieure est munie d'une cavité du type rentrant dont le diamètre diminue vers une arête d'ouverture ; et
un injecteur de carburant qui injecte du carburant vers une partie de bord du piston formée à l'arête d'ouverture de la cavité, le procédé étant **caractérisé en ce qu'**il comprend :

effectuer une conception de manière qu'une distance parcourue par le jet de carburant Sp dans un délai de 0,42 ms après le début de l'injection de carburant à l'aide de l'injecteur de carburant, un angle de cône θ du jet de carburant provenant de l'injecteur de carburant et un diamètre d'ouverture minimal Dlip à la partie de bord de la cavité satisfont la relation

$$Dlip = k \times Sp \times \sin(\theta/2)$$

k étant = 1,4 à 1,8.

FIG. 1

FIG. 2A

FIG. 2B

FIG. 2C

FIG. 3

FIG. 4A

cross-sectional fuel distribution | cross-sectional velocity vectors | cross-sectional temperature distribution

ATDC6°

22°

FIG. 4B

30°

FIG. 5A

FIG. 5B

## FIG. 6A

cross-sectional fuel distribution    cross-sectional velocity vectors    cross-sectional temperature distribution

ATDC10°

22°

H

## FIG. 6B

30°

H

FIG. 7A

| cross-sectional fuel distribution | cross-sectional velocity vectors | cross-sectional temperature distribution |

FIG. 7B

EP 1 264 973 B1

FIG. 8A

| cross-sectional fuel distribution | cross-sectional velocity vectors | cross-sectional temperature distribution |

ATDC14°

FIG. 8B

# FIG. 9A

cross-sectional
fuel distribution

cross-sectional
velocity vectors

cross-sectional
temperature distribution

ATDC16°

22°

# FIG. 9B

30°

H

H

H

FIG. 10A

cross-sectional
fuel distribution

cross-sectional
velocity vectors

cross-sectional
temperature distribution

ATDC18°

22°

FIG. 10B

30°

H

H

EP 1 264 973 B1

# FIG. 11

# FIG. 12

# FIG. 13

# FIG. 14

(large)

amount of smoke

◆ 1500rpm-0.3MPa
■ 2000rpm-0.57MPa
▲ 2500rpm-0.9MPa

0
0.0        0.5        1.0        1.5        2.0

impact index

# FIG. 15

(large)

amount of smoke

→◆→ injector ①(22°)
→■→ injector ②(30°)

EGR:20%
EGR:15%
EGR:10%
EGR:0%

0
0
amount of NO        (large)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0941975 A

### Non-patent literature cited in the description

- *Journal of the Society of Automotive Engineers of Japan,* July 2000, vol. 31 (3), 51-56